# EUROPEAN PATENT APPLICATION

(11) **EP 2 609 844 A2**
(43) Date of publication of application: **03.07.2013**
(21) Application number: 12159095.4
(22) Date of filing: 12.03.2012
(51) Int. Cl.: A47L 5/22

(54) **Motor assembly for vacuum cleaner**

(30) Priority: 29.12.2011 KR 20110146316
(71) Applicant: Samsung Electro-Mechanics Co., Ltd, Suwon Gyunggi-do 443-743 (KR)
(72) Inventor: Jang, Su Bon, 443-743 Gyunggi-do (KR); Bae, Han Kyung, 443-743 Gyunggi-do (KR); Yoon, Hee Soo, 443-743 Gyunggi-do (KR); Yoon, Young Bok, 443-743 Gyunggi-do (KR); Park, Chang Hwan, 443-743 Gyunggi-do (KR); Lee, Sang Jong, 443-743 Gyunggi-do (KR); Seok, Jin Su, 443-743 Gyunggi-do (KR)
(74) Representative: Heine, Christian Klaus

(57) **Abstract**

Disclosed herein is a motor assembly for a vacuum cleaner, the motor assembly including: an inlet introducing air therethrough; a motor; an impeller installed on a shaft of the motor and including a plurality of blades disposed at predetermined intervals between a pair of plates facing each other so that it rotates by the motor to suck the air; a diffuser disposed at an outer side of a discharge hole formed at an edge of the impeller; a first fan including a plurality of blade parts disposed at predetermined intervals while having the shaft as a concentric axis and disposed beneath the diffuser; and an outlet discharging the air to the outside.

## Description

### CROSS REFERENCE TO RELATED APPLICATION

This application claims the benefit of Korean Patent Application No. 10-2011-0146316, filed on December 29, 2011, entitled "Motor Assembly for Vacuum Cleaner", which is hereby incorporated by reference in its entirety into this application.

### BACKGROUND OF THE INVENTION

### 1. Technical Field

The present invention relates to a motor assembly, and more particularly, to a motor assembly capable of being used in a vacuum cleaner.

### 2. Description of the Related Art

A vacuum cleaner, which is a device converting electrical energy into mechanical rotational movement to partially generate vacuum, thereby collecting external foreign materials such as dust, includes a motor assembly in order to generate the vacuum.

An example of this motor assembly is disclosed in Patent Document 1. Patent Document 1 (Korean Patent No 10-0633431) has disclosed "Impeller and Motor Assembly having the Same".

The motor assembly disclosed in Patent Document 1 is configured to include a motor, an impeller, and a diffuser as well known previously.

Schematically, when the motor assembly according to the prior art is applied with external power, a motor having a rotor rotating with respect to a stator by electromagnetic force rotates to forcibly rotate an impeller installed at an upper end of a shaft of the motor, thereby sucking air. In addition, this motor assembly guides the air sucked into the impeller to an inner portion of the motor assembly while reducing a speed of the air.

The motor assembly according to the prior art disclosed in Patent Document 1 sucks the air into the motor assembly in the vacuum cleaner at a rapid speed using the impeller. In this case, the motor assembly cannot but generate heat. The motor assembly in a heat generating state is cooled through the air to be introduced into the impeller. However, since the air is guided to the inner portion of the motor assembly in a state in which a speed thereof is significantly reduced through the diffuser, it is not rapidly discharged from an inner portion of the motor to an outer portion thereof, such that the motor assembly may not be effectively cooled.

In addition, since the diffuser should forcibly guide the air to be sucked into the impeller to the inner portion of the motor assembly, channel loss occurs, such that rotational performance of the impeller may be deteriorated.

In order to solve this problem, Patent Document 2 suggests "Motor combined with fan". In Patent Document 2, a suction fan sucking air is installed at a lower end of a shaft of a motor.

In the motor having this structure, the suction fan is generally installed so as to be spaced apart from an inlet provided in an upper portion of the motor by a predetermined distance. More specifically, the suction fan is disposed at a lower portion of the motor including a stator and a rotor. That is, the suction fan is rotated through rotational driving of the motor to suck the air through the inlet, and the sucked air is discharged to the outside through a scroll of the suction fan while traversing the motor to cool the motor.

However, the motor disclosed in Patent Document 2 includes the suction fan installed at the lower portion thereof. This suction fan has a diameter larger than that of the motor, such that it is difficult to adopt the motor in a vacuum cleaner having a limited internal space.

Another scheme capable of solving the problems as described above should be considered.

### [Prior Art Document]

### [Patent Document]

Patent Document 1: Korean Patent No. 10-0633431
Patent Document 2: Korean Patent Laid-Open Publication No. 10-2002-0043278

### SUMMARY OF THE INVENTION

The present invention has been made in an effort to provide a motor assembly capable of guiding air sucked into an impeller to an inner portion thereof without reducing a speed of the air.

According to a first embodiment of the present invention, there is provided a motor assembly for a vacuum cleaner, the motor assembly including: an inlet introducing air therethrough; a motor; an impeller installed on a shaft of the motor and including a plurality of blades disposed at predetermined intervals between a pair of plates facing each other so that it rotates by the motor to suck the air; a diffuser disposed at an outer side of a discharge hole formed at an edge of the impeller; a first fan including a plurality of blade parts disposed at predetermined intervals while having the shaft as a concentric axis and disposed beneath the diffuser; and an outlet discharging the air to the outside.

The blade of the impeller and the blade part of the first fan may have the same pattern. The blades of the impeller and the blade parts of the first fan may have a spiral shape with the same curvature and may be formed to have the same number.

The motor may include a stator and a rotor, and a position of the rotor may be fixed onto the shaft using upper and lower stoppers.

The first fan may be disposed between the diffuser and the motor, and more preferably, be disposed on an outer peripheral surface of the upper stopper.

The first fan may include the plurality of blade parts disposed at predetermined intervals between a pair of upper and lower plates facing each other while having the shaft as the concentric axis, similar to the impeller, and an upper plate of the first fan may include an opening part formed at the center thereof.

The upper plate of the first pan may include the opening part to allow the shaft to penetrate therethrough and allow the air guided from the diffuser to be sucked.

According to a second embodiment of the present invention, there is provided a motor assembly for a vacuum cleaner, the motor assembly including: an inlet introducing air therethrough; a motor; an impeller installed on a shaft of the motor and including a plurality of blades disposed at predetermined intervals between a pair of plates facing each other so that it rotates by the motor to suck the air; a diffuser disposed at an outer side of a discharge hole formed at an edge of the impeller; a second fan including a plurality of blade parts disposed at predetermined intervals while having the shaft as a concentric axis and disposed beneath the motor; and an outlet discharging the air to the outside.

The motor assembly may further include a first fan including a plurality of blade parts disposed at predetermined intervals while having the shaft as the concentric axis and disposed beneath the diffuser.

The blade of the impeller, a blade part of a first fan, and/or the blade part of the second fan may have the same pattern. That is, the blades and the blade parts may have a spiral shape with the same curvature and may be formed to have the same number.

The motor may include a stator and a rotor, and a position of the rotor may be fixed onto the shaft using upper and lower stoppers.

The first fan may be disposed between the diffuser and the motor, and more preferably, be disposed on an outer peripheral surface of the upper stopper.

The second fan may be disposed beneath the motor, and more preferably, be disposed on an outer peripheral surface of a lower stopper.

The second fan may be disposed at a height equal to or higher than that of the outlet.

The outlet may be formed at an outer side of the second fan in order to rapidly discharge the air to be discharged at a high speed to the outside so that the air to be discharged to an edge of the second fan is not re-guided or re-circulated to an inner portion of the motor assembly.

The second fan may include the plurality of blade parts disposed at predetermined intervals between a pair of upper and lower plates facing each other while having the shaft as the concentric axis, similar to the impeller, and an upper plate of the second fan may includes an opening part formed at the center thereof.

### BRIEF DESCRIPTION OF THE DRAWINGS

FIG. 1 is a longitudinal cross-sectional view of a motor assembly according to a first preferred embodiment of the present invention;
FIG. 2 is a perspective view of a first fan coupled onto a shaft shown in
FIG. 1;

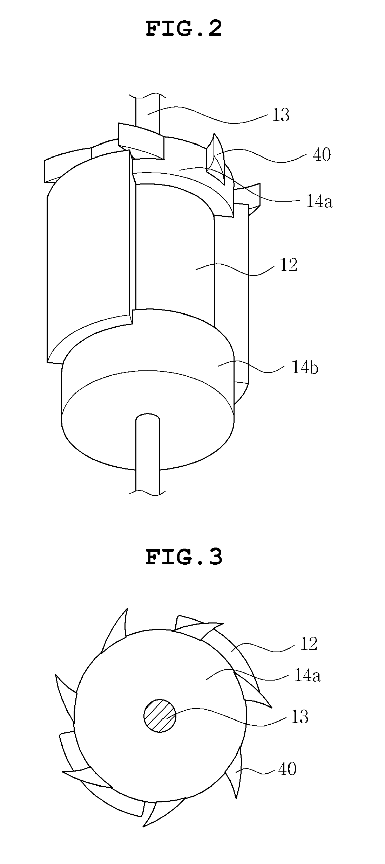

FIG. 3 is a plan view of the first fan shown in FIG. 2;

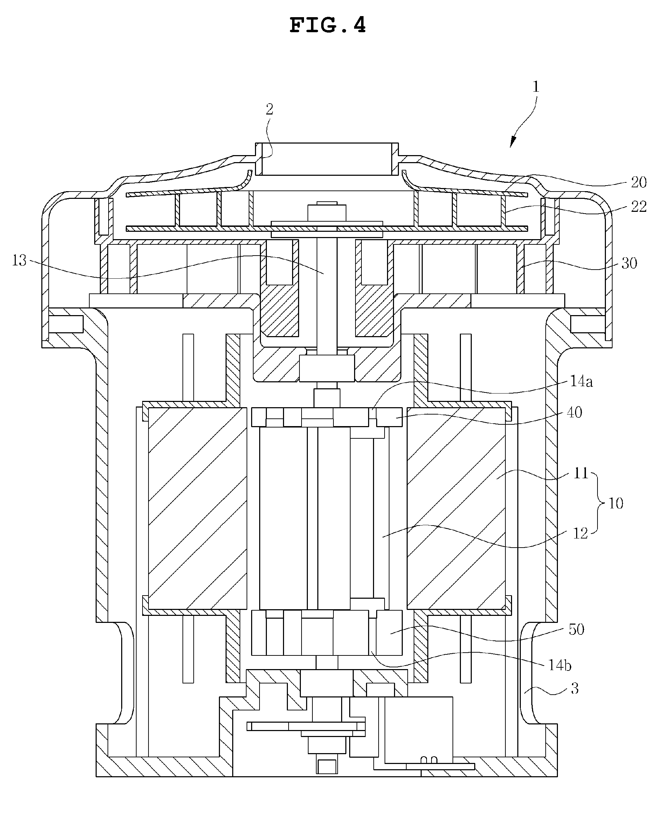

FIG. 4 is a longitudinal cross-sectional view of a motor assembly according to a second preferred embodiment of the present invention;

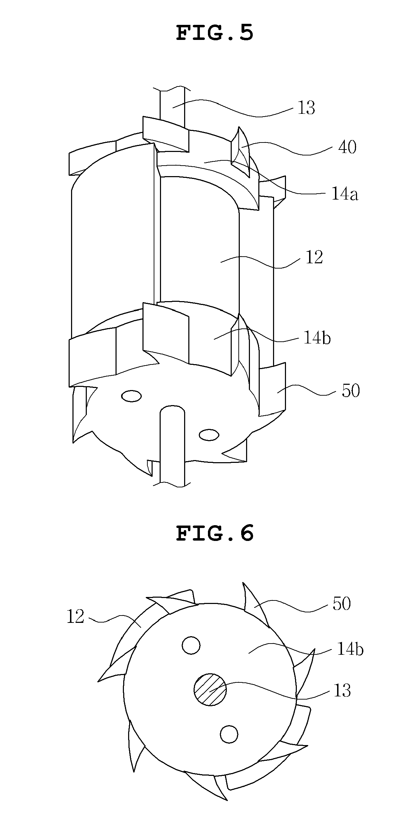

FIG. 5 is a perspective view of first and second fans coupled onto a shaft shown in FIG. 4; and
FIG. 6 is a bottom view of the second fan shown in FIG. 4.

### DESCRIPTION OF THE PREFERRED EMBODIMENTS

The terms and words used in the present specification and claims should not be interpreted as being limited to typical meanings or dictionary definitions, but should be interpreted as having meanings and concepts relevant to the technical scope of the present invention based on the rule according to which an inventor can appropriately define the concept of the term to describe most appropriately the best method he or she knows for carrying out the invention.

Hereinafter, a motor assembly according to preferred embodiments of the present invention, particularly, a motor assembly for a vacuum cleaner will be described in detail with reference to the accompanying drawings.

Various advantages and features of the present invention and methods accomplishing thereof will become apparent from the following description of embodiments with reference to the accompanying drawings. In the present specification, in adding reference numerals to components shown in each of the accompanying drawings, it is to be noted that like reference numerals designate like or similar components throughout the specification. Further, in the present specification, when a detailed description of the known art related to the present invention obscure the gist of the present invention, the detailed description thereof will be omitted.

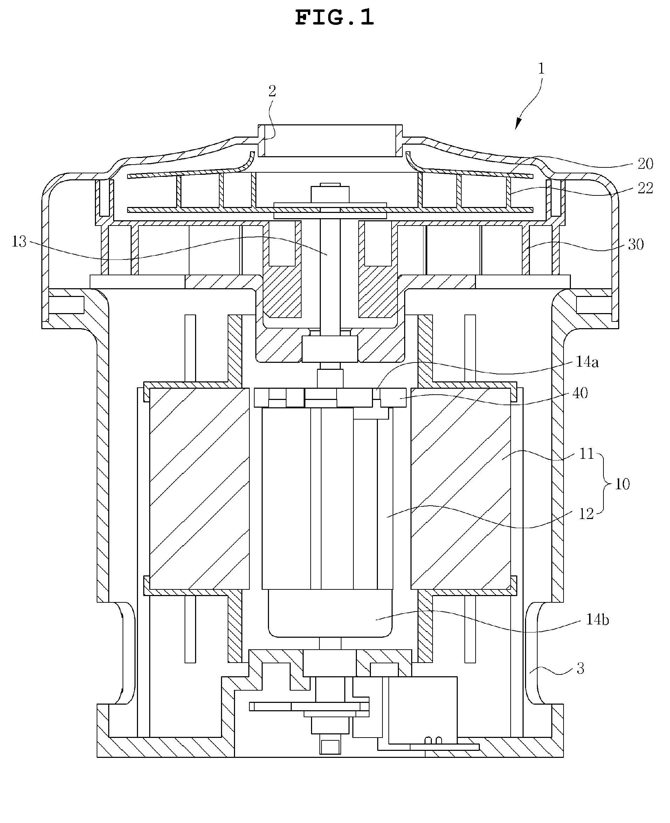

FIG. 1 is a longitudinal cross-sectional view of a motor assembly according to a first preferred embodiment of the present invention.

As shown, the motor assembly 1 according to the first preferred embodiment of the present invention is configured to include a motor 10, an impeller 20, a diffuser 30, and a first fan 40.

The motor 10 includes a stator 11 and a rotor 12 as well known in the art previously and rotate the rotor 12 disposed to face the stator 11 in the case in which current is applied from the outside thereto. Since the rotor 12 is disposed on a shaft 13 of the motor 10, rotation of the rotor 12 is transferred to the shaft 13 to provide rotational driving of the motor 10.

Particularly, the motor 10 includes an upper stopper 14a provided on an upper portion of the rotor 12 and a lower stopper 14b provided on a lower portion of the rotor 12.

The upper stopper 14a is disposed on the upper portion of the rotor 12 and fixes positions of the rotor 12 and the shaft 13. Similarly, the lower stopper 14b is disposed on the lower portion of the rotor 12 and fixes the position of the rotor 12 and the shaft 13.

The impeller 20 is coupled to an upper end of the shaft 13, such that rotational movement of the rotor 12 is transferred to the impeller 20 coupled to the shaft 13. Rotational movement of the impeller 20 provides centrifugal force around the impeller 20. This centrifugal force allows air outside an inlet to be sucked while discharging air positioned at the center of the impeller 20 to an edge of the impeller 20, that is, in an outward direction. The impeller 20 includes upper and lower plates spaced apart from each other by a predetermined interval while having the shaft 13 as a concentric axis, and blades 22 provided between the upper and lower plates. Each of the blades 22 is disposed at predetermined intervals between the upper and lower plates in a radial direction and has a curved shape with a predetermined curvature. The center of the upper plate is provided with an introduction path of the air to be introduced by the rotational movement of the impeller 20.

The impeller 20 is fixed to the shaft 13 penetrating through the center of the lower plate and includes a plurality of blades 22 arranged on the lower plate.

Each of the plurality of blades 22 has a blade pattern in which it is extended in a radial spiral shape from the rotation center (for example, the shaft 13) of the lower plate in the outward direction, as well known previously to those skilled in the art. This impeller 20 includes the plurality of blades 22 each having the curved shape with a predetermined curvature. The number and the curvature of blades according to the preferred embodiment of the present invention may be changed as needed.

The diffuser 30 is arranged at an outer side of the impeller 20 so as to be spaced apart from the impeller 20 by a predetermined interval so that the impeller 20 may rotate. The diffuser 30 guides the air introduced at a high speed through the inlet 2 by the rotation of the impeller 20 to an inner portion of the motor assembly 1.

As described above, the diffuser 30 is designed to forcibly guide the air discharged in the radial direction by the impeller 20 toward the inner portion of the motor assembly 1 without directly impacting an inner side wall of a housing of the motor assembly 1, such that channel loss occurs.

This channel loss significantly reduces the air speed, thereby deteriorating cooling performance of the motor assembly 1.

Therefore, the motor assembly 1 is **characterized in that** it includes the first fan 40 capable of supplementing the channel loss. Particularly, the first fan 40 according the preferred embodiment of the present invention increases the reduced speed of the air, thereby making it possible to effectively cool heat generated in the motor 10.

Particularly, in the motor assembly 1 according to the preferred embodiment of the present invention, the first fan 40 is disposed between the diffuser 30 and the motor 10. More specifically, the first fan 40 is disposed on an outer peripheral surface of the upper stopper 14a of the motor 10.

The first fan 40 includes a plurality of blade parts each formed in a blade shape on the upper stopper 14a while having the shaft 13 as a concentric axis.

The blade parts of the first fan 40 are disposed at predetermined intervals in the radial direction on the outer peripheral surface of the upper stopper 14a. Further, each of individual blade parts of the first fan 40 has a curved shape with a predetermined curvature.

Particularly, since the blade part of the first fan 40 has the same structure as that of the blade 22 of the impeller 20, it may suck and/or move the air at a high speed, almost similar to the impeller 20. That is, a flow direction of the air discharged from the impeller 20 is forcibly changed through the diffuser 30, such that the channel loss is caused. However, the air guided to the diffuser 30 may recover its speed by rotational movement of the first fan 40.

Although not shown, as another example of the first fan 40 according to the first preferred embodiment of the present invention, the first fan 40 is formed to be similar to the impeller 20. More specifically, the first fan may also include upper and lower plates arranged to be spaced apart from each other by a predetermined interval while having the shaft 13 or the upper stopper 14a as a concentric axis and blade parts provided between the upper and lower plates.

The lower plate has a disk shape, and the upper plate has a disk plate corresponding to that of the lower plate and includes an opening part formed at the center thereof.

This exemplary first fan is disposed between the diffuser 30 and the motor 10. More specifically, the first fan may also be disposed beneath the diffuser 30.

The blade parts of the first fan may be disposed at predetermined intervals in the radial direction simultaneously with being disposed between the upper and lower plates to fix positions of the upper and lower plates. In addition, each of the blade parts has a curved shape with the same curvature as that of the blade 22 of the impeller 20.

When external power is supplied to the motor assembly 1 according to the preferred embodiment of the present invention configured as described above, the rotational driving of the motor 10 is transferred to the shaft 13, and the rotational movement of the shaft 13 is transferred to the impeller 20 coupled to the shaft 13.

The impeller 20 sucks the air in the vicinity of the inlet 2 while rotating in the above-mentioned scheme. That is, the air passes through the introduction path of the upper plate to thereby be sucked into the impeller 20 and is then discharged toward the edge, by the centrifugal force of the impeller 20. Then, the air is forcibly guided toward the inner portion of the motor assembly 1 via the diffuser 30 arranged at an outer side of the impeller 20.

As described above, the first fan 40 is also coupled to the shaft 13 or the upper stopper 14a of the motor 10 to rotate in the same scheme as the rotation scheme of the impeller 20, thereby applying the centrifugal force to the air guided to the diffuser 30. Therefore, a speed of the air introduced into the motor assembly may increased to the same level as that of the air in the impeller 20 and a flow amount of the air may be recovered.

The air introduced through the first fan 40 is discharged to the inner portion of the motor assembly 1. This air may efficiently cool heat generated in the motor assembly while moving in an internal space of the motor assembly 1 at a high speed, and waste heat exits through an outlet 3.

FIG. 2 is a bottom view of a first fan included in the motor assembly according to the first preferred embodiment of the present invention; and FIG. 3 is a plan view of the first fan shown in FIG. 2.

As shown, the first fan 40 is fixed to the upper stopper 14a of the rotor 12 based on the shaft 13 and includes the plurality of blade parts arranged in a circumferential direction on the outer peripheral surface of the upper stopper 14a.

Each of the plurality of blade parts has a blade part pattern in which it is extended in a radial spiral shape from, for example, the shaft 13 or the upper stopper 14a in the outward direction, Here, the terms "pattern" means that the blade parts are arranged to have a predetermined number and a predetermined spiral shape.

As described above, the first fan 40 rapidly sucks the air in which the channel loss is generated due to the diffuser, thereby making it possible to increase a heat radiation effect in the motor assembly and improve suction force of the impeller.

In other words, the motor assembly according to the preferred embodiment of the present invention has the blade part pattern that is the same as the blade pattern of the impeller 20 (See FIG. 1). That is, the number and the spiral shape of blades included in the impeller are the same as those of blade parts included in the first fan 40.

The impeller 20 (See FIG. 1) and the first fan 40 that have the same rotational speed may allow a speed of the air discharged to the impeller and a speed of the air discharged to the first fan to be the same as each other due to the blade and the blade part that have the same pattern.

FIG. 4 is a longitudinal cross-sectional view of a motor assembly according to a second preferred embodiment of the present invention; FIG. 5 is a perspective view of first and second fans coupled onto a shaft shown in FIG. 4; and FIG. 6 is a bottom view of the second fan shown in FIG. 4.

As shown, the motor assembly 1 according to the second preferred embodiment of the present invention is configured to include a motor 10, an impeller 20, a diffuser 30, a first fan 40, and a second fan 50.

The motor assembly 1 according to the preferred embodiment of the present invention shown in FIG. 4 is similar to the motor assembly 1 shown in FIG. 1 except for the second fan. Therefore, in order to assist in clear understanding of the present invention, a description of components that are the same as or similar to the above-mentioned components will be omitted.

The motor assembly 1 according to the second preferred embodiment of the present invention is **characterized in that** it include the first and second fans 40 and 50 capable of supplementing channel loss due to the diffuser 30. Particularly, the first fan 40 according to the second preferred embodiment of the present invention may increase a speed of air reduced due to the diffuser 30 to effectively cool heat generated in the motor 10, and the second fan 50 according to the second preferred embodiment of the present invention may suck air staying in the motor assembly 1 to rapidly discharge the air to the outside.

As shown, the first fan 40 may be disposed between the diffuser 30 and the motor 10 and be preferably disposed on an outer peripheral surface of the stopper 14a.

In addition, the second fan 50 may be disposed beneath the motor 10. Preferably, the second fan 50 may also be disposed on an outer peripheral surface of the lower stopper 14b of the motor 10.

The second fan 50 according to the second preferred embodiment of the present invention includes a blade part pattern in which it is extended in a radial spiral shape from the rotation center (for example, the shaft 13 or the lower stopper 14b) in the outward direction, similar to the first fan 40 and has a predetermined curvature.

Since the second fan 50 has the same structure as that of the first fan 40 as described above, it may rapidly suck the air guided to the inner portion of the motor assembly 1 through the first fan 40. That is, relatively low temperature air to be supplied to the first fan 40 contacts high heat generated in an internal component of the motor assembly 1, that is, the motor 10, to cool the inner portion of the motor assembly 1. The second fan 50 is disposed beneath the motor 10 as shown, thereby making it possible to rapidly discharge air staying in the motor assembly 1 to the outside. The motor assembly 1 according to the second preferred embodiment of the present invention may include the second fan as a necessary component and include the first fan described in the first preferred embodiment of the present invention as a selective component.

Although not shown, as another example of the second fan 50 according to the second preferred embodiment of the present invention, the second fan 50 is formed to be similar to the impeller 20. More specifically, the second fan may also include upper and lower plates arranged to be spaced apart from each other by a predetermined interval while having the shaft 13 or the lower stopper 14b as a concentric axis and blade parts provided between the upper and lower plates.

The lower plate has a disk shape, and the upper plate has a disk plate corresponding to that of the lower plate and includes an opening part formed at the center thereof.

This exemplary second fan may also be disposed based on the shaft 13 beneath the motor 10.

The blade parts of the second fan may be disposed at predetermined intervals in the radial direction simultaneously with being disposed between the upper and lower plates to fix positions of the upper and lower plates, similar to the first fan described above. In addition, each of the blade parts has a curved shape with the same curvature as that of the blade 22 of the impeller 20.

It is preferable that since the second fan 50 may suck the air staying in the motor assembly 1 to discharge the sucked air to the outside, an edge of the second fan 50 is disposed in the vicinity of an outlet 3 of the motor assembly 1. The edge of the second fan 50 and the outlet 3 are disposed at the same height so that the air discharged from the second fan 50 at a high speed may be rapidly discharged to the outside without being re-guided to the inner portion of the motor assembly 1.

In the case in which the motor assembly 1 according to the second preferred embodiment of the present invention is supplied with external power, it operates as described below, thereby making it possible to improve a heat radiation effect as well as suction force of the air.

When the external power is supplied to the motor assembly 1, rotational driving of the motor 10 is transferred to the impeller 20.

The impeller 20 sucks the air in the vicinity of the inlet 2 while rotating. Then, the air is forcibly guided toward the inner portion of the motor assembly 1 via the diffuser 30 arranged at an outer side of the impeller 20.

The first fan 40 is also coupled to the shaft 13 or the upper stopper 14a of the motor 10 to rotate in the same scheme as the rotation scheme of the impeller 20, thereby making it possible to increase a speed of the air reduced due to the diffuser 30 to the same level as that of the air in the impeller 20 and recover a flow amount of the air.

The air introduced through the first fan 40 is discharged to the inner portion of the motor assembly 1, such that it contacts heat generated in an internal space of the motor assembly 1.

Then, the air staying in the internal space of the motor assembly 1 is sucked through the rotational driving of the second fan 50 and is discharged to the outlet 3, thereby radiating the heat of the motor assembly 1.

As set forth above, according to the preferred embodiments of the present invention, it is possible to increase a speed of the air to be guided to the inner portion of the motor assembly.

Particularly, according to the preferred embodiments of the present invention, the speed of the air is increased, thereby making it possible to significantly reduce a time in which the air stays in the motor.

Since the motor assembly according to the preferred embodiments of the present invention does not require a separate space in which the fan is additionally to be mounted, it may be used as the motor assembly mounted in a limited space such as a vacuum cleaner.

In addition, according to the preferred embodiments of the present invention, the air sucked at a high speed is discharged to the outside simultaneously with contacting high heat generated in the motor assembly, thereby making it possible to maximize a heat radiation effect of the motor assembly.

Although the preferred embodiments of the present invention has been described above with reference to the accompanying drawings, it will be appreciated that a motor assembly according to the invention is not limited thereto, and those skilled in the art will appreciate that various modifications and alterations are possible, without departing from the scope and spirit of the invention described in the claims.

## Claims

1. A motor assembly for a vacuum cleaner, the motor assembly comprising:
an inlet introducing air therethrough;
a motor;
an impeller installed on a shaft of the motor and including a plurality of blades disposed at predetermined intervals between a pair of plates facing each other so that it rotates by the motor to suck the air;
a diffuser disposed at an outer side of a discharge hole formed at an edge of the impeller;
a first fan including a plurality of blade parts disposed at predetermined intervals while having the shaft as a concentric axis and disposed beneath the diffuser; and
an outlet discharging the air to the outside.

2. The motor assembly as set forth in claim 1, wherein the blade of the impeller and the blade part of the first fan have the same pattern.

3. The motor assembly as set forth in claim 1, wherein the motor includes a stator and a rotor, and a position of the rotor is fixed onto the shaft using upper and lower stoppers.

4. The motor assembly as set forth in claim 1, wherein the first fan is disposed on an outer peripheral surface of an upper stopper.

5. The motor assembly as set forth in claim 1, wherein the first fan includes the plurality of blade parts disposed at predetermined intervals between a pair of upper and lower plates facing each other while having the shaft as the concentric axis.

6. The motor assembly as set forth in claim 1, wherein an upper plate of the first fan includes an opening part formed at the center thereof.

7. A motor assembly for a vacuum cleaner, the motor assembly comprising:
an inlet introducing air therethrough;
a motor;
an impeller installed on a shaft of the motor and including a plurality of blades disposed at predetermined intervals between a pair of plates facing each other so that it rotates by the motor to suck the air;
a diffuser disposed at an outer side of a discharge hole formed at an edge of the impeller;
a second fan including a plurality of blade parts disposed at predetermined intervals while having the shaft as a concentric axis and disposed beneath the motor; and
an outlet discharging the air to the outside.

8. The motor assembly as set forth in claim 7, further comprising a first fan including a plurality of blade parts disposed at predetermined intervals while having the shaft as the concentric axis and disposed beneath the diffuser.

9. The motor assembly as set forth in claim 7, wherein the blade part of the second fan has the same pattern as that of the blade of the impeller.

10. The motor assembly as set forth in claim 7, wherein the blade part of the second fan has the same pattern as that of a blade part of a first fan.

11. The motor assembly as set forth in claim 7, wherein the motor includes a stator and a rotor, and a position of the rotor is fixed onto the shaft using upper and lower stoppers.

12. The motor assembly as set forth in claim 7, wherein the second fan is disposed on an outer peripheral surface of a lower stopper.

13. The motor assembly as set forth in claim 8, wherein the first fan is disposed on an outer peripheral surface of an upper stopper.

14. The motor assembly as set forth in claim 7, wherein the second fan is disposed at a height equal to or higher than that of the outlet.

15. The motor assembly as set forth in claim 7 or 8, wherein the first fan includes the plurality of blade parts disposed at predetermined intervals between a pair of upper and lower plates facing each other while having the shaft as the concentric axis,
the second fan includes the plurality of blade parts disposed at predetermined intervals between a pair of upper and lower plates facing each other while having the shaft as the concentric axis, and
each of upper plates of the first fan and the second fan includes an opening part formed at the center thereof.
